# EUROPEAN PATENT SPECIFICATION

(11) **EP 4 068 130 B1**
(45) Date of publication and mention of the grant of the patent: **25.09.2024**
(21) Application number: 21852257.1
(22) Date of filing: 25.06.2021
(51) Int. Cl.: G06F 21/60, G06F 21/62, H04L 9/00, H04L 9/08, H04L 9/40, G09C 1/00

(54) **DATA SHARING SYSTEM, DATA SHARING METHOD, AND DATA SHARING PROGRAM**
SYSTEM, VERFAHREN UND PROGRAMM ZUR GEMEINSAMEN NUTZUNG VON DATEN
SYSTÈME DE PARTAGE DE DONNÉES, PROCÉDÉ DE PARTAGE DE DONNÉES ET PROGRAMME DE PARTAGE DE DONNÉES

(30) Priority: 04.08.2020 JP 2020132721
(43) Date of publication of application: 05.10.2022
(73) Proprietor: Eaglys Inc., Tokyo 1510051 (JP)
(72) Inventor: IMABAYASHI Hiroki, Tokyo 151-0051 (JP); MARUYAMA Yusuke, Tokyo 151-0051 (JP)
(74) Representative: Lewis Silkin LLP
(86) International application number: PCT/JP2021/024147
(87) International publication number: WO 2022/030136

(56) References cited:
- EP-A1- 2 731 040
- WO-A1-2012/043012
- WO-A1-2012/043056
- WO-A1-2012/081450
- WO-A1-2014/010202
- WO-A1-2019/098941
- JP-A- 2005 352 634
- JP-A- 2019 070 973
- US-A1- 2019 220 619
- US-A1- 2020 145 200
- TOSHIYUKI ISSHIKI, SATOSHI OBANA, KENGO MORI: "Software Implementation of Privacy Preserving Statistical Computations based on Homomorphic Encryption", IEICE TECHNICAL REPORT, vol. 111, no. 455, 23 February 2012 (2012-02-23), pages 135 - 140, XP055500618

## Description

### TECHNICAL FIELD

The present invention relates to a data sharing system, a data sharing method and a data sharing program.

### BACKGROUND ART

Patent document 1 discloses an attribute-based key management system wherein a data encryption key used to encrypt data is encrypted using a first asymmetric key and a policy. The policy includes rules that correspond to attributes. A second asymmetric key is associated with the attributes. To decrypt the encrypted data encryption key, the attributes are used to identify the second asymmetric key. The attributes are also used to pass the rules in the policy included in the encrypted data encryption key. If the attributes pass the rules in the policy, the encrypted data encryption key is decrypted. The decrypted data encryption key can then decrypt the encrypted data.

In an electronic commerce service provided on the Internet, there is a technology of statistically analyzing personal information of a user such as a gender, an address and transaction information by a service provider for the purpose of the marketing and the like not only using the data possessed by the company but also utilizing data outside the company. For example, Patent document 2 discloses an electronic commerce system wherein a service provider can obtain analysis of transaction histories without obtaining personal information of users.

### PRIOR ART DOCUMENTS

### [Patent Documents]

Patent document 1: US 2020/145200 A1
Patent document 2: Japanese Patent Application Publication No. 2019-125883

### DISCLOSURE OF THE INVENTION

### [Problems to be Solved by the Invention]

However, in the system described in Patent document 1, a service providing server which wants to perform the statistical analysis transmits an encryption key to all other service providing servers so that the other service providing servers encrypt the data by using the transmitted encryption key and transmit the encrypted data to the server of a third party organization which performs the statistical analysis. Since the data possessed by the other service providing servers is encrypted by the encryption key of the others, the other service providing servers should fear the possibility of the occurrence of problems in information security such as information leakage and illegal use.

Accordingly, the present disclosure is made for solving the above described problems and the purpose of the present disclosure is to provide a data sharing system capable of utilizing the data possessed by various companies safely without disclosing the details of the data to the other companies.

### [Means for Solving the Problem]

In order to achieve the above described purpose, according to a first aspect of the present invention there is provided a data sharing system according to claim 1.

In order to achieve the above described purpose, according to a second aspect of the present invention there is provided a data sharing method according to claim 9.

Furthermore, in order to achieve the above described purpose, according to a third aspect of the present invention there is provided a data sharing program according to claim 10.

Preferable features are set out in the remaining claims.

### [Effects of the Invention]

By using the present disclosure, in the data sharing system, the data possessed by various companies can be utilized safely without disclosing the details of the data to the other companies.

### BRIEF DESCRIPTION OF THE DRAWINGS

Fig.1 is a drawing showing a configuration of a data sharing system 1.
Fig. 2 is a functional block diagram showing an example of a functional configuration of a data providing server 100.
Fig. 3 is a drawing showing an example of the data structure of sensitive data.
Fig. 4 is a drawing showing an example of the data structure of the encrypted sensitive data.
Fig. 5 is a drawing showing an example of the data structure of the integrated data.
Fig. 6 is a functional block diagram showing an example of a functional configuration of a management server 200.
Fig. 7 is a drawing showing an example of the data structure of a configuration file.
Fig. 8 is a functional block diagram showing an example of a functional configuration of a terminal device 400.
Fig. 9 is a flow chart showing an example of the process of storing the integrated data in a common database.
Fig. 10 is a flow chart showing an example of a data processing.
Fig. 11 is a block diagram showing a hardware configuration of the management server 200.

### MODES FOR CARRYING OUT THE INVENTION

Hereafter, the embodiments of the present disclosure will be explained with reference to the drawings. In all drawings explaining the embodiments, the same reference signs are assigned to the common component to omit the repeated explanation. Note that the following embodiments do not unreasonably limit the content of the present disclosure described in the claims. In addition, all components disclosed in the embodiments are not necessarily essential components of the present disclosure. The scope of the invention is defined by the independent claims.

### <Outline of present invention>

In recent years, the number of the organizations who possess a large amount of sensitive data such as customer information has been increased. Because of this, it has been spread that the cloud service for performing statistical analysis processing and the like using not only the sensitive data possessed by own organization but also the sensitive data possessed by the other organizations to find new knowledge on business and connect it to new service. However, when using the sensitive data, security should be considered, privacy should be protected and extreme care should be paid when treating the data. Thus, it is required to execute the data processing such as retrieval (search), tabulation analysis and statistics while preventing the information leakage of the sensitive data possessed by own organization.

Accordingly, in the data sharing system of the present invention, the sensitive data provided from the organization or the like joined in the system is encrypted by a predetermined encryption scheme (the encryption scheme where the calculation including retrieval, analysis and the like can be performed in the encrypted state) and the data processing is executed while the key used for encryption and decryption is managed in each organization which provides the sensitive data. Consequently, the sensitive data possessed by own organization and the decryption processing of the execution result of the data processing related to the sensitive data can be managed in own organization. Thus, the sensitive data can be utilized safely without unintentionally disclosing the detailed content of the sensitive data to the other organizations.

### [Embodiment 1]

### (Configuration of data sharing system 1)

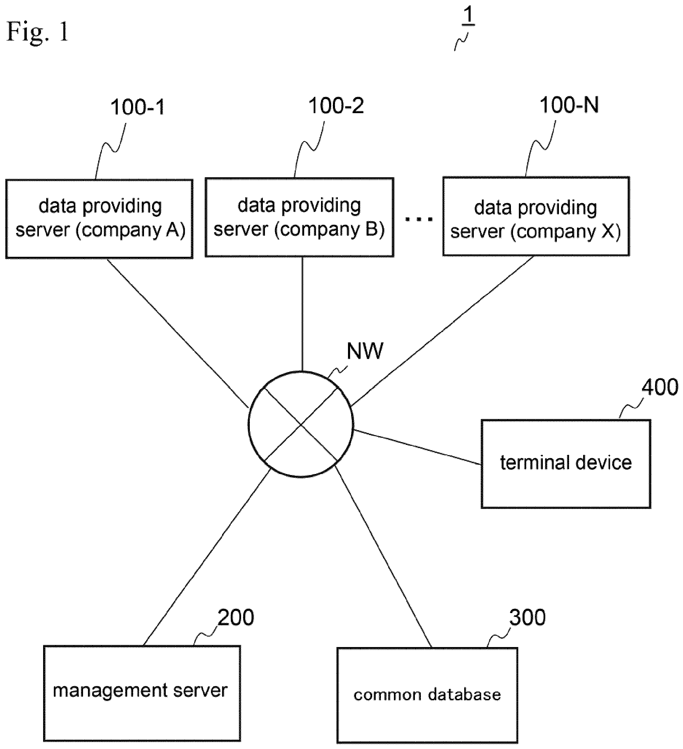

Fig.1 is a drawing showing a configuration of a data sharing system 1 of the present embodiment. With reference to Fig. 1, the configuration of the data sharing system 1 of the embodiment 1 will be explained.

The data sharing system 1 includes data providing servers 100-1, 100-2, ---, 300-N (N is natural number), a management server 200, a common database 300 and a terminal device 400 and they are communicatively connected with each other via a network NW. The network NW is, for example, WAN (Wide Area Network), LAN (Local Area Network), optical line network, intranet or the like. The network NW can be comprised of arbitrary network. The data sharing system 1 is a platform that enables each of the organizations joined in the system to use the data possessed by each of the organizations without disclosing the detailed contents of the data to the other organizations. Note that the organization is not limited to a company and a party. The organization can be a department, a division, a group, a team and the like divided according to the role.

In the following explanation, the data providing servers 100-1, 100-2, ---, 100-N are referred to as a data providing server 100 unless it is necessary to distinguish them with each other. In the present embodiment, the common database 300 is connected with the management server 200 via the network NW. However, the configuration is not limited to this. The common database 300 can be locally connected with the management server 200.

The data providing server 100 is associated with the organization joined in the platform. The data providing server 100 encrypts the sensitive data possessed by the organization and transmits the encrypted data to the management server 200. In Fig. 1, the data providing server 100-1 is associated with "company A," the data providing server 100-2 is associated with "company B" and the data providing server 100-N is associated with "company X," for example.

The sensitive data includes attribute values of each attribute item (column). The data providing server 100 transmits the sensitive data in which at least a part of the attribute values is encrypted to the management server 200. The data structure of the sensitive data will be described later. Furthermore, the data providing server 100 can store and manage an encryption key and a decryption key in own server (data providing server 100). Otherwise, the data providing server 100 can store and manage them in another information processing device (e.g., the management can be entrusted to KSM: Key Management Service).

The management server 200 generates an integrated data by integrating the encrypted sensitive data obtained from each of the data providing servers 100 based on an identifier which is included in the sensitive data as one of the attribute items and stores the integrated data in the common database 300. Furthermore, the management server 200 executes the data processing of the integrated data in the encrypted state according to a processing request of the data processing processed to the integrated data stored in the common database. Then, the management server 200 transmits a processing request of a decryption processing to the data providing server 100 from which the sensitive data including the attribute item of the data processing is provided for requesting the data providing server 100 to decrypt the encrypted execution result.

As described above, the common database 300 stores the integrated data generated in the management server 200. Although the management server 200 generates the integrated data in the present embodiment, it is also possible to generate the integrated data in another information processing device or the like instead of the management server 200.

The terminal device 400 is an information processing device used by a user of the data sharing system 1. For example, the terminal device 400 is a PC (Personal Computer), a smartphone or a tablet terminal. In addition, the terminal device 400 can be wearable terminals such as a head mount display and the like or AR (Augmented Reality)/VR (Virtual Reality)/MR (Mixed Reality) devices. Note that the user can be an employee of the organization (e.g., company A) that joins the platform and provides the sensitive data, for example. In this case, the terminal device 400 can be configured to be linked with the data providing server 100 of the organization to which the user belongs.

The terminal device 400 transmits the processing request of the data processing to the management server 200 wherein the data processing is targeted at the integrated data stored in the common database 300. The data processing includes a retrieval/tabulation processing and/or a statistical processing, for example. In addition, the data processing can include the processing of integrating the sensitive data. The processing request of the data processing is written by CLI (Command Line Interface) such as SQL statement or GUI (Graphical User Interface).

Hereafter, the functional configuration and the processing of each of the servers and the like constituting the above described data sharing system 1 will be explained. Note that the functional block and the processing block indicating each of the functional configurations can be achieved by a distribution group of one or a plurality of devices, computer processors and the computer processors.

### (Functional configuration of data providing server 100)

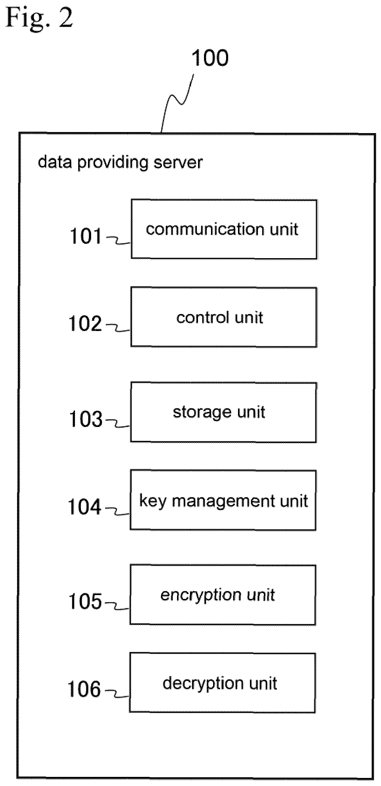

Fig. 2 is the functional block diagram showing an example of the functional configuration of the data providing server 100. With reference to Fig. 2, an example of the functional configuration of the data providing server 100 will be explained.

The data providing server 100 includes a communication unit 101, a control unit 102, a storage unit 103, a key management unit 104, an encryption unit 105 and a decryption unit 106.

The communication unit 101 includes a communication interface circuit so that the data providing server 100 establishes the communication with the servers and the devices via a network NW according to a predetermined communication protocol. The predetermined communication protocol is TCP/IP (Transmission Control Protocol/Internet Protocol), for example. The communication unit 101 transmits the received data to the control unit 102 and transmits the data received from the control unit 102 to the servers and the devices via the network NW. The communication unit 101 can also transmit and receive the data to/from the functional blocks other than the control unit 102 in the data providing server 100. Note that the communication unit 101 transmits and receives the data to/from the devices connected via the network NW, the devices connected locally and the like using a secure communication channel where security is ensured. The explanation of the method for constructing the secure communication channel and the communication method is omitted since they are well known technology using a common key (e.g., session key), a public key and the like.

The communication unit 101 corresponds to the sensitive data acquisition unit. For example, the communication unit 101 acquires the sensitive data possessed by the organization from the organization joined in the platform. In Fig. 1, the data providing server 100-1 associated with the company A can acquire the sensitive data from the terminal device 400 operated by the employee of the company A. In the present embodiment, the sensitive data is the information about an individual, for example. The sensitive data is the attribute value (string or numerical value) of the attribute item (column) which is the item indicating the attribute of the individual such as an age, a gender, an income, a residential area and a purchase information. In addition, the sensitive data includes the identifier (string, numerical value or combination of them) as one of the attribute items. The identifier functions as an integrated key for generating the integrated data. A common ID or the like for uniquely identifying the individual can be used as the identifier. The sensitive data is integrated based on the identifier to generate the integrated data. The sensitive data is not limited to the information about the individual. The sensitive data can be log data related to the device, for example. The details of the sensitive data and the details of the data structure of the sensitive data and will be described later.

The control unit 102 controls the functions of the data providing server 100. The control unit 102 is a processor such as a CPU (Control Processing Unit) operated based on the programs preliminarily stored in the storage unit 103. Note that a DSP (Digital Signal Processor) or the like can be used as the control unit 102. In addition, the control circuit such as an LSI (Large Scale Integration), an ASIC (Application Specific Integrated Circuit) and an FPGA (Field-Programming Gate Array) can be used as the control unit 102.

The control unit 102 controls the encryption unit 105 to encrypt the sensitive data obtained via the communication unit 101. In addition, the control unit 102 controls the decryption unit 106 to decrypt the execution result of the data processing obtained via the communication unit 101.

In addition, the control unit 102 can judge whether or not to decrypt the execution result in response to the inquiry transmitted from the management server 200. For example, the control unit 102 can judge whether or not to decrypt the execution result based on whether or not the terminal device from which the processing request of the data processing is transmitted has the authority to use the execution result, for example. When the control unit 102 judges that the terminal device has the authority, the control unit 102 transmits a permission response to the management server 200 via the communication unit 101. Thus, the control unit 102 controls the decryption unit 106 to decrypt the execution result transmitted from the management server 200.

The storage unit 103 includes a memory device such as a RAM (Random Access Memory) and a ROM (Read Only Memory), a fixed disk device such as a hard disk drive or a portable disk device such as a flexible disk and an optical disc, for example. In addition, the storage unit 103 stores computer programs, database, tables, keys and the like used for various processing of the data providing server 100. The computer programs can be installed in the storage unit 103 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The storage unit 103 stores the encrypted sensitive data, the decrypted execution result of the data processing and the later described encryption key and decryption key managed by the key management unit 104, for example.

The key management unit 104 manages the encryption key and the decryption key. The key management unit 104 can generate the key corresponding to the encryption scheme requested by the encryption unit 105, for example. For example, when the encryption scheme is the (additive) homomorphic encryption scheme (Paillier method) where addition and subtraction can be performed in the encrypted state, a group of a public key (encryption key) and a secret key (decryption key) is generated.

When the encryption scheme is an order-preserving encryption scheme (OPE scheme: Order Preserving Encryption) where the magnitude relation is not changed between the encrypted text and the plaintext or a retrievable encryption scheme where the coincidence of the plaintext can be judged in the encrypted state, the secret key (common key) is generated. As described above, the encryption key and the decryption key can be different keys such as the public key and the secret key in some cases, although they can be the same key such as the common key in other cases. Note that the explanation of key generation algorithm is omitted since the key generation algorithm is conventionally known technology.

The key management unit 104 stores the generated key, parameters for generating the key and the like in the storage unit 103, for example. The key management unit 104 manages the generated key, the encryption scheme, the identification of the data (e.g., attribute item, column) to which the encryption is performed and the like in association with each other.

The encryption unit 105 encrypts at least a part of the attribute values of the sensitive data obtained by the communication unit 101 by the predetermined encryption scheme. The predetermined encryption scheme includes the encryption scheme that is capable of performing the calculation of at least a part of the attribute values of the sensitive data obtained by the communication unit 101 in the encrypted state. For example, the predetermined encryption scheme can be a homomorphic encryption scheme, an order-preserving encryption scheme, AES (Advanced Encryption Standard), DES (Data Encryption Standard), the retrievable encryption, SHA (Secure Hash Algorithm), MD5 (Message Digest algorithm 5) and the like. Note that the "calculation" includes the calculation related to addition, subtraction, multiplication and division and the calculation related to retrieval and analysis. In the present embodiment, when the data format of the attribute value of the attribute item included in the sensitive data is a numerical value, the encryption unit 105 performs the encryption using the homomorphic encryption scheme (e.g., Paillier scheme, Lifted-Ellgamal scheme, Somewhat Homomorphic Encryption scheme, Fully Homomorphic Encryption scheme) and/or the order-preserving encryption scheme (OPE scheme). Since the processing efficiency varies depending on the encryption scheme and the content of the data processing, each of the attribute items can be stored in a plurality of encryption schemes (e.g., the attribute value encrypted by the homomorphic encryption scheme, the attribute value encrypted by the order-preserving encryption scheme, the attribute value encrypted by the later described retrievable encryption scheme). When the data format is the string, the encryption is performed using the retrievable encryption scheme or the AES encryption since complete matching is possible in the encrypted text, for example. Note that the above described encryption schemes applied depending on the data format are merely examples. The organization possessing the sensitive data can arbitrarily determine the target attribute value of the attribute item to be encrypted and the encryption scheme used for the encryption. In addition, it is also possible to determine whether or not to encrypt the sensitive data according to the intention of the individual.

In the present embodiment, the encryption unit 105 does not encrypt the identifier included as one of the attribute items. Because of this, the management server 200 integrates the sensitive data received from each of the data providing servers 100 based on the identifier to generate the integrated data. The process of generating the integrated data will be descried later. The explanation of encryption algorithm is omitted since the encryption algorithm is conventionally known technology. As another embodiment, it is also possible that the encryption unit 105 encrypts the identifier which is included as one of the attribute items.

In addition, the encryption unit 105 encrypts a predetermined data (e.g., SQL statement as the processing request) transmitted from the management server 200 in accordance with the request from the management server 200.

The decryption unit 106 decrypts the execution result of the data processing obtained by the communication unit 101. More specifically, in the execution result to which the decryption processing is requested from the management server 200, the decryption unit 106 acquires the corresponding decryption key from the storage unit 103 and decrypts the execution result of the data processing of the attribute items encrypted by the encryption key managed by the key management unit 104 in accordance with the encryption scheme of the encryption. Note that the explanation of decryption algorithm is omitted since the decryption algorithm is conventionally known technology.

In addition, the decryption unit 106 transmits the decrypted execution result to the control unit 102, and the control unit 102 transmits the decrypted execution result to the management server 200. Alternatively, the control unit 102 can transmit the decrypted execution result to the terminal device 400 from which the processing request of the data processing is transmitted in accordance with the request from the management server 200.

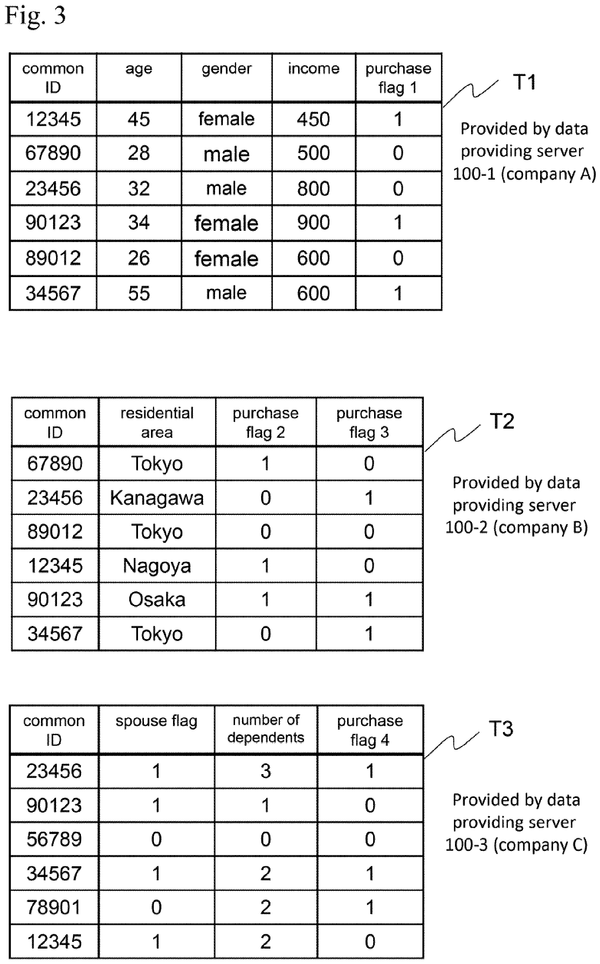

Fig. 3 is a drawing showing an example of the data structure of sensitive data. In the present embodiment, the sensitive data is the information about the individual. The sensitive data is the attribute value (string or numerical value) of the attribute item (column) such as the age, the gender, the income, the residential area and the purchase information. Furthermore, the sensitive data includes the identifier (common ID) as one of the attribute items for uniquely identifying the individual as the integrated key. The identifier can be a numerical value, a string or the combination of the numerical value and the string. For simplifying the explanation, predetermined attribute items are shown in Fig. 3. However, the not illustrated attribute items can be further included in the sensitive data. In addition, the sensitive data is not limited to the information about the individual. The sensitive data can be confidential information (e.g., sensing data and log data) related to the system of IoT/NW devices, industrial devices and the like. Furthermore, the integrated key is not limited to the identifier uniquely identifying the individual. An arbitrary value can be used as the integrated key as long as it can uniquely identify the data in a plurality of tables.

In Fig. 3, tables T1, T2 and T3 storing the attribute values of the attribute items are shown. The table 1 shows the sensitive data provided by the data providing server 100-1 (i.e., the data possessed by the company A). In the table T1, the sensitive data includes "common ID" as the identifier for uniquely identifying the individual, "age" indicating the age of the individual, "gender" indicating the gender of the individual, "income" indicating the income of the individual, and "purchase flag 1" indicating the presence or absence of the purchase of the product 1 purchased by the individual as the attribute items. In the table T1, the attribute values of the attribute items of "common ID," "age," "income" and "purchase flag 1" are the numerical values. Although the attribute value of "gender" is the category (string) in Fig. 3, the category can be also shown by the numerical value by associating the gender with the numerical value, for example.

In the table T1, the attribute value "12345" is stored for the attribute item "common ID," the attribute value "45" is stored for the attribute item "age," the attribute value "female" is stored for the attribute item "gender," the attribute value "450" is stored for the attribute item "income" and the attribute value "1" is stored for the attribute item "purchase flag 1." This means that the age of the individual who has the common ID of 12345 is 45 years, the gender is female, the income is 450 (ten thousand yen) and the individual has already bought the product 1. Similarly, for the attribute values "67890," "23456," "90123," "89012" and "34567" of the attribute item "common ID," the attribute values are stored for each of the attribute items.

The table 2 shows the sensitive data provided by the data providing server 100-2 (i.e., the data possessed by the company B). The data providing server 100-2 provides the sensitive data including the attribute item different from that of the company A possessing the sensitive data shown in the table T1.

In the table T2, the sensitive data includes "common ID" as the identifier for uniquely identifying the individual, "residential area" indicating the area in which the individual lives, "purchase flag 2" indicating the presence or absence of the purchase of the product 2 purchased by the individual, and "purchase flag 3" indicating the presence or absence of the purchase of the product 3 purchased by the individual as the attribute items. In the table T2, the attribute values of the attribute items "common ID," "purchase flag 2" and "purchase flag 3" are the numerical values, while the attribute values of the attribute item "residential area" are the string. Although the attribute value of "residential area" is the category (string) in Fig. 3, the category can be also shown by the numerical value by associating the area with the numerical value, for example. For example, in the table T2, the attribute value "67890" is stored for the attribute item "common ID," the attribute value "Tokyo" is stored for the attribute item "residential area," the attribute value "1" is stored for the attribute item "purchase flag 2" and the attribute value "0" is stored for the attribute item "purchase flag 3." This means that the residential area of the individual who has the common ID of 67890 is Tokyo, the individual has already bought the product 2 and the individual has not bought the product 3 yet. Similarly, for the attribute values "23456," "89012," "12345," "90123" and "34567" of the attribute item "common ID," the attribute values are stored for each of the attribute items.

Although the attribute items are different between the table T1 and the table T2 except for "common ID," the record shown by the same "common ID" corresponds to the same individual. For example, the record (individual) identified by the attribute value "67890" of "common ID" in the table T1 is same as the record (individual) identified by the attribute value "67890" of "common ID" in the table T2.

The table T3 shows the sensitive data provided by the data providing server 100-3 (i.e., the data possessed by the company C). The data providing server 100-3 provides the sensitive data different from the sensitive data of the company A and the company B possessing the sensitive data shown in the table T1 and the table T2.

In the table T3, the sensitive data includes "common ID" as the identifier for uniquely identifying the individual, "spouse flag" indicating the presence or absence of the spouse, "number of dependents" indicating the number of the dependents and "purchase flag 4" indicating the presence or absence of the purchase of the product 4 purchased by the individual as the attribute item. In the table T3, the attribute values of the attribute items "common ID," "spouse flag," "number of dependents" and "purchase flag 4" are the numerical values. For example, in the table T3, the attribute value "23456" is stored for the attribute item "common ID," the attribute value "1" is stored for the attribute item "spouse flag," the attribute value "3" is stored for the attribute item "number of dependents" and the attribute value "1" is stored for the attribute item "purchase flag 4." This means that the individual who has the common ID of 23456 has the spouse, the individual has three dependents and the individual has already bought the product 4. Similarly, for the attribute values "90123," "56789," "78901" and "12345" of the attribute item "common ID," the attribute values are stored for each of the attribute items.

The attribute items are different between the table T3 and the table T1 or T2 except for "common ID." In addition, the attribute values "56789" and "78901" are included only in the table T3 as the attribute item "common ID" Namely, it is not necessary that the same group of the records is included in all tables. The table can include the group of the records that are different from those of another table. In the present embodiment, as shown in Fig. 3, the attribute items included in the sensitive data provided by each of the data providing servers are different except for "common ID" (identifier). However, the same attribute item can be included as another embodiment. In that case, a system administrator or the like can properly specify and determine which of the data providing servers is prioritized as the attribute value of the integrated data.

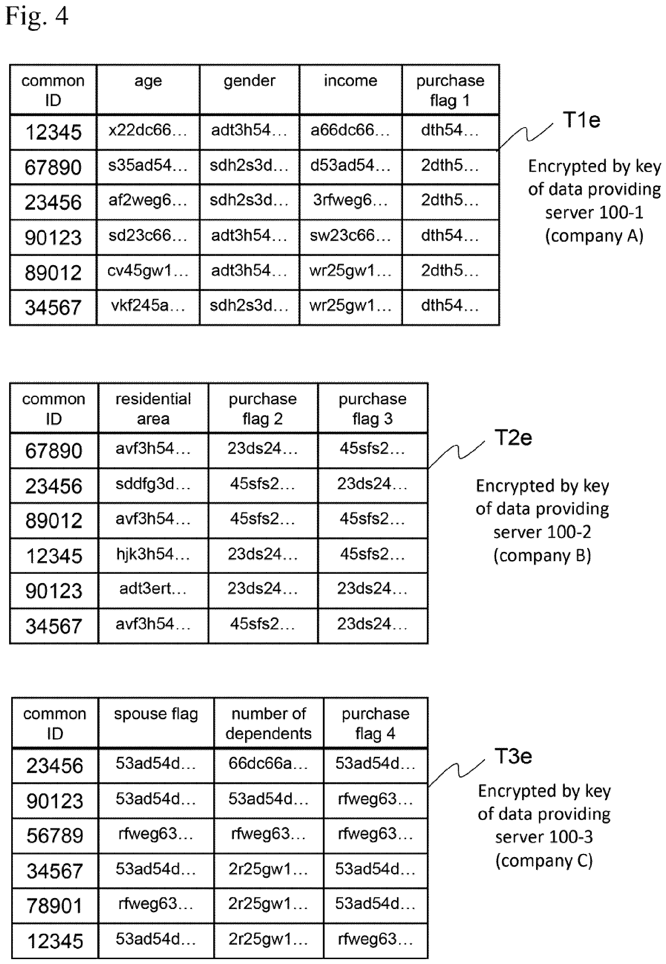

Fig. 4 is a drawing showing an example of the data structure of the encrypted sensitive data. In Fig. 4, the tables T1e, T2e and T3e in which the attribute values of the attribute items are encrypted except for "common ID" are shown.

In the table T1e, the attribute values of the table T1 are encrypted except for "common ID" based on the encryption key managed by the data providing server 100-1 (company A). For example, the attribute items "age," "income" and "purchase flag 1" whose attribute values are indicated by the numerical values are encrypted by the homomorphic encryption scheme and/or the order-preserving encryption schemes, while the attribute item "gender" whose attribute values are indicated by the string is encrypted by the retrievable encryption scheme. For simplifying the explanation, the values encrypted by the homomorphic encryption scheme are shown in the table T1e for the data of the attribute values indicated by the numerical value (hereafter, same in the tables T2e and T3e).

In the table T2e, the attribute values of the table T2 are encrypted except for "common ID" based on the encryption key managed by the data providing server 100-2 (company B). For example, the attribute items "purchase flag 2" and "purchase flag 3" whose attribute values are indicated by the numerical values are encrypted by the homomorphic encryption scheme and/or the order-preserving encryption scheme, while the attribute item "residential area" whose attribute values are indicated by the string is encrypted by the retrievable encryption scheme.

In the table T3e, the attribute values of the table T3 are encrypted except for "common ID" based on the encryption key managed by the data providing server 100-3 (company C). For example, the attribute items "spouse flag," "number of dependents" and "purchase flag 4" whose attribute values are indicated by the numerical values are encrypted by the homomorphic encryption scheme and/or the order-preserving encryption scheme.

It is not necessary to encrypt the attribute values of all attribute items except for "common ID" in each of the tables by the same encryption key. For example, it is possible to encrypt them by using different keys according to the degree of importance or the like. In addition, it is possible to determine the attribute values to be encrypted according to the disclosure condition or the like of each of the attribute items. For example, it is possible to specify the data providing server 100-3 not to encrypt the attribute values of the attribute item "purchase flag 4" in the table T3 according to the instruction of the organization (company C) possessing the sensitive data.

In addition, although the numerical values of the encrypted data are same in Fig. 4 when the attribute values of the data are same in Fig. 3, the following method can be employed for increasing the security. For example, both attribute values are stored: one is the attribute value (retrieval data) encrypted as it is for a retrieval processing; and the other is the attribute value (communication data) encrypted by adding random values before and after the attribute value. Thus, it is possible to use the retrieval data for the retrieval processing with complete matching and use the communication data for the communication. In this case, the added random values are deleted after the decryption to output the attribute value. Although the attribute values except for "common ID" are encrypted in Fig. 4, the attribute item itself and the attribute value of the common ID can be also encrypted.

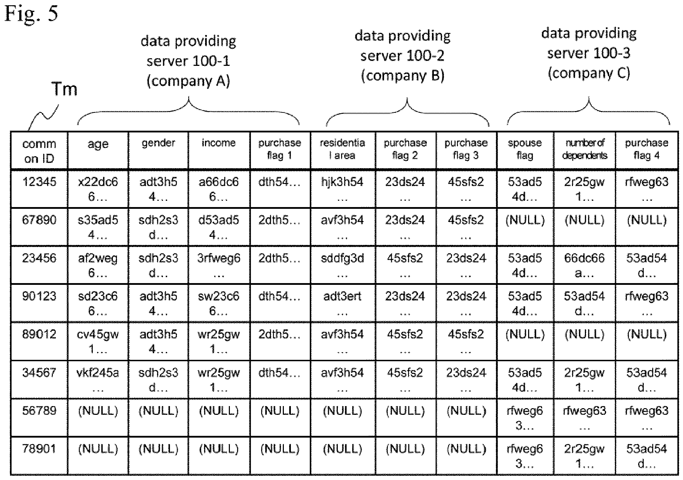

Fig. 5 is a drawing showing an example of the data structure of the integrated data. In Fig. 5, an integrated table Tm is the table integrated by using the attribute values (identifiers) of the attribute item "common ID" included in the tables T1e, T2e and T3e as the integrated key. Namely, the integrated data is the table Tm including "common ID," "age," "income," "purchase flag 1," "residential area," "purchase flag 2," "purchase flag 3," "spouse flag," "number of dependents" and "purchase flag 4" as the attribute items wherein the attribute values of the attribute items except for "common ID" are encrypted as shown in Fig. 4. The integrated data having the data structure shown in Fig. 5 is stored in the common database 300. The common database 300 is a relational database storing a table having the attribute items as columns, for example. Note that the rows of the integrated table are referred to as "record" in this specification.

In the integrated table Tm, the attribute items (columns) "age," "income" and "purchase flag 1" are the sensitive data provided by the data providing server 100-1 (company A). The attribute items (columns) "residential area," "purchase flag 2" and "purchase flag 3" are the sensitive data provided by the data providing server 100-2 (company B). The attribute items (columns) "spouse flag," "number of dependents" and "purchase flag 4" are the sensitive data provided by the data providing server 100-3 (company C).

As for the attribute values of the attribute items included in the table T3 and not included in the tables T1 and T2 (e.g., the attribute values "56789" and "78901" of "common ID"), a designer of the database or an administrator of the management server 200 or the like can arbitrarily determine to store a blanc (NULL) value or a dummy numerical value, for example. Alternatively, it is also possible to delete the record in which the attribute values other than the attribute value of the attribute item "common ID" is not stored in the integrated data.

Namely, in the example of Fig. 5, the integration processing including the integration of the table in a lateral direction (i.e., addition of "attribute item" (column) and the integration of the table in a vertical direction (i.e., addition of "record") is performed using the attribute item "common ID" shown in the tables T1e, T2e and T3e of Fig. 4 as the integrated key. Note that the common database 300 is not limited to the relational database illustrated above. The kind of the common database 300 can be NoSQL, NewSQL and Graph Database, for example.

### (Functional configuration of management server 200)

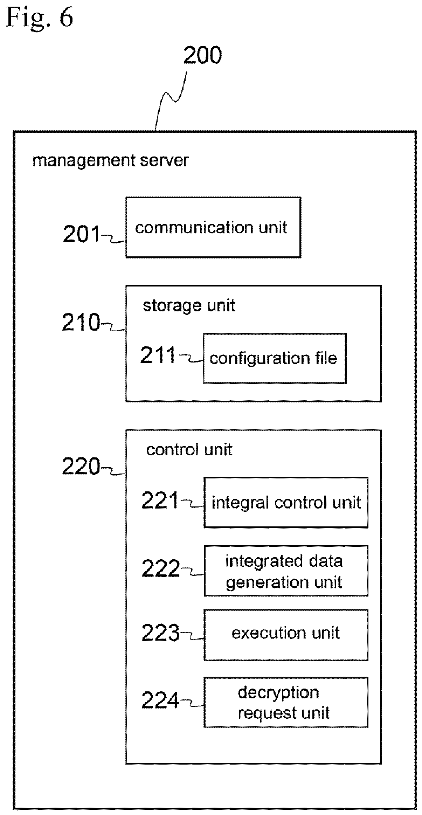

Fig. 6 is a functional block diagram showing an example of a functional configuration of the management server 200. With reference to Fig. 6, an example of the functional configuration of the management server 200 will be explained.

The management server 200 includes a communication unit 201, a storage unit 210 and a control unit 220.

The communication unit 201 includes a communication interface circuit so that the management server 200 can establish the communication with the other servers and the devices via the network NW according to a predetermined communication protocol. The communication unit 201 transmits the received data to the control unit 220 and transmits the data received from the control unit 220 to the other servers and the devices via the network NW.

In addition, the communication unit 201 functions as the reception unit for receiving the processing request of the later described data processing processed to the integrated data stored in the common database 300. Note that the communication unit 201 transmits and receives the data to/from the devices and the like via the network NW using a secure communication channel where security is ensured. The explanation of the method of constructing the secure communication channel and the communication method is omitted since they are well known technology.

The storage unit 210 includes a memory device such as a RAM (Random Access Memory) and a ROM (Read Only Memory), a fixed disk device such as a hard disk drive or a portable disk device such as a flexible disk and an optical disc, for example. In addition, the storage unit 210 stores computer programs, database, tables, keys and the like used for various processing of the management server 200. The computer programs can be installed in the storage unit 210 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The storage unit 210 has a configuration file 211 related to the data processing. The configuration file 211 defines a criteria for determining whether or not to execute the data processing. For example, the configuration file 211 stores the users or the like having the execution authority of the data processing in association with the attribute items of the integrated data. In addition, the configuration file 211 stores the device (organization) from which the data is provided in association with the attribute items of the integrated data. Note that the configuration file 211 can be arbitrarily specified by the administrator of the management server 200, the administrator of the data providing server 100 or the associated organization.

In addition, the storage unit 210 stores the encrypted sensitive data that the communication unit 201 received from the data providing server 100.

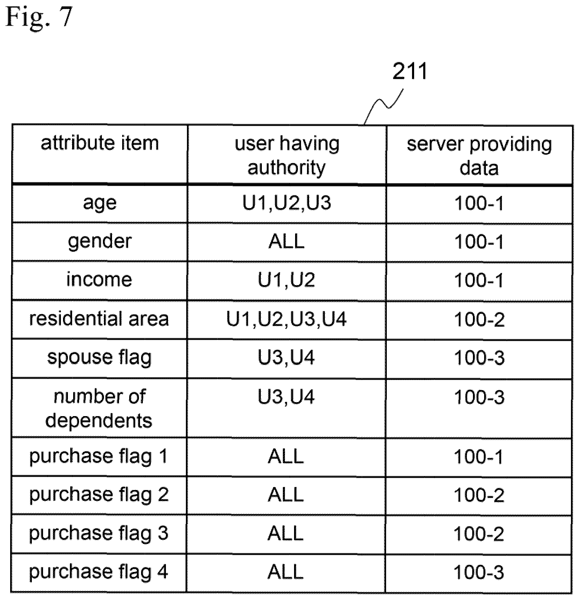

Fig. 7 is a drawing showing an example of the data structure of the configuration file. In Fig. 7, the configuration file 211 stores the "attribute items" included in the integrated data shown in Fig. 5 by associating "user having authority" for performing the data processing with "server providing the data" (data providing server) providing the corresponding attribute items (columns).

The authority for performing the data processing about the attribute item is the authority for performing the statistical processing and the retrieval processing about the attribute values of the attribute items specified as the object of the data processing. For example, it is the authority for executing the data processing for the attribute item "age" as the object. For example, it is the statistical processing for calculating an average value, a maximum value and a minimum value of the attribute values or the retrieval processing for calculating the number of the records having a predetermined age or more. In addition, it can be the authority for performing the statistical processing for the attribute item "gender" as the object for extracting the records of the female, counting the number of the extracted records, or calculating an average value of the attribute values of a predetermined attribute item, for example.

Here, the "user having authority" for the attribute item "age" is "U1, U2, U3" and the "user having authority" for the attribute item "gender" is "ALL" (all users). Accordingly, as for the data processing processed to the integrated data, in case the average of the attribute item "age" is calculated for the record of the attribute value "female" for the attribute item "gender," the user has the authority for performing the processing request when the user who transmits the processing request is any one of "U1, U2, U3." Since the other users than "U1, U2, U3" do not have the authority for executing the data processing about "age," the other users cannot execute the data processing of calculating the average of the attribute item "age" of the attribute item "female."

In Fig. 6, the control unit 220 includes an integral control unit 221, an integrated data generation unit 222, an execution unit 223 and a decryption request unit 224. The integral control unit 221 is a processor such as a CPU (Control Processing Unit) operated based on programs preliminarily stored in the storage unit 210 to control the functions of the management server 200. Note that a DSP (digital signal processor) or the like can be used as the integral control unit 221. In addition, control circuits such as an LSI (large scale integration), an ASIC (Application Specific Integrated Circuit) and an FPGA (Field-Programming Gate Array) can be used as an integral control unit 204.

In accordance with the control of the integral control unit 221, the integrated data generation unit 222 generates the integrated data by integrating the encrypted sensitive data received from the data providing servers 100 via the communication unit 201 and stored in the storage unit 210 based on the identifiers (common IDs in the example of Figs. 3 to 5) included as the attribute item in the sensitive data. Then, the integrated data generation unit 222 transmits the generated integrated data to the integral control unit 221, and the integral control unit 221 stores the integrated data in the common database 300 via the communication unit 201. In addition, after the integrated data is generated, the integrated data generation unit 222 can delete the integrated sensitive data from the storage unit 210.

In addition, the integrated data generation unit 222 stores the attribute items included in the integrated data in the configuration file 211. It is possible to disclose the attribute items included in the integrated data based on the configuration file 211. Because of this, the user joined in the data sharing system 1 can recognize the attribute items to which the data processing can be requested. Although the attribute items are disclosed, the attribute values of the attribute items are encrypted and stored in the common database 300. Thus, the integrated data can be utilized securely in the data sharing system 1. Note that the processing of integrating the sensitive data in the integrated data generation unit 222 can be executed by the later described execution unit 223 as the data processing of the integrated data or executed by another information processing device which obtains the encrypted sensitive data.

The execution unit 223 executes the data processing based on the processing request of the data processing processed to the integrated data. Then, the execution unit 223 transmits the execution result to the decryption request unit 224. Here, the data processing includes a retrieval processing and/or a statistical processing targeted at least a part of the attribute items of the integrated data. In the present embodiment, the retrieval processing is the processing of extracting the record satisfying a predetermined condition. In addition, the statistical processing is the processing executed by the function for tabulation, for example. Representatively, the statistical processing is the processing of counting the number of lines (records) of the table (COUNT function), the processing of summing the data of the numerical columns in the table (SUM function), the processing of calculating the average of the data of the numerical columns in the table (AVG function), the processing of calculating the maximum value of the data of an arbitrary column in the table (MAX function), the processing of calculating the minimum value of the data of an arbitrary column in the table (MIN function), and the like. However, the statistical processing is not limited to the above described examples. The statistical processing can be SQL syntax such as "GROUP BY" for grouping (classifying) the data by a target segment and "ORDER BY" for rearranging the data in ascending or descending order.

The processing request of the data processing can be a query described in the SQL statement, for example. More specifically, as the SQL statement targeted at the table Tm which is the integrated data shown in Fig. 5, the communication unit 201 receives the SQL statement indicated as "select avg (age) from `table Tm' where `residential area'=Tokyo;" as the processing request of the data processing, for example. Based on the SQL statement, the execution unit 223 accesses the common database 300 via the communication unit 201, extracts the record having the attribute value "Tokyo" of the attribute item "residential area" in the table Tm, and executes the processing of calculating the average value of the attribute values of the attribute item "age" in the extracted record. Since the data of the table Tm is encrypted as described above, the following processes are performed.

For example, the execution unit 223 refers to the configuration file 211 for the match judgement of the condition of the where clause and acquires the information of the data providing server 100 which encrypted the attribute item "residential area." Then, the execution unit 223 transmits the conditional statement of the where clause to the data providing server 100 (the data providing server 100-2 in the example of Fig. 7) which encrypted the attribute item "residential area" via the communication unit 201. At that time, the execution unit 223 requests the data providing server 100 to use the encryption scheme capable of executing the encryption in the encrypted state (e.g., AES and retrievable encryption) to acquire the encrypted conditional statement of the where clause. For example, in accordance with the request from the execution unit 223, the data providing server 100-2 encrypts "Tokyo" using the encryption key used when encrypting the attribute item "residential area" with respect to the above described query "select avg (age) from `table Tm' where `residential area'=Tokyo;." Then, the data providing server 100-2 returns (transmits) "select avg (age) from 'the table Tm' where `residential area'=avf3h54...;" including the encrypted where clause to the execution unit 223 of the management server 200.

Since the attribute values of the attribute item "age" are encrypted by the (additive) homomorphic encryption scheme where addition and subtraction can be performed in the encrypted state, the execution unit 223 calculates the average value for the extracted record by using the well known method. As described above, the execution unit 223 can execute the SQL statement. Then, the execution result (the encrypted text indicating the average of the attribute values of "age" of the individuals having the attribute value "Tokyo" as "residential area" in the above described example) is outputted.

It is also possible that the execution unit 223 judges whether or not to execute the data processing based on the configuration file 211 when the execution unit 223 receives the processing request of the data processing. As described above, the configuration file 211 stores each of the attribute items of the integrated data in association with the user having the authority for executing the data processing. Therefore, the execution unit 223 judges whether or not the user who performs the processing request of the data processing has the authority for executing the data processing to the attribute item for the object of the data processing. When the execution unit 223 judges that the user does not have the authority, the execution unit 223 can transmit an error notification to the user who performs the processing request via the communication unit 201 for notifying that the user does not have the authority, for example. When the execution unit 223 judges that the user has the authority, the execution unit 223 executes the data processing and transmits the execution result to the decryption request unit 224.

In addition, the execution unit 223 can execute the data processing based on the judgement from the SQL statement whether or not the attribute item for the object of the data processing is included in the integrated data. The execution unit 223 refers to the configuration file 211 and acquires the information of the attribute items included in the integrated data. Then, when the execution unit 223 judges that the attribute items for the object of the data processing are not included in the integrated data, the execution unit 223 can transmit an error notification to the user who performs the processing request via the communication unit 201 for notifying that the attribute items for the object of the data processing are not included in the integrated data, for example. In addition, there is a possibility that the user erroneously selected the attribute item for the object of the data processing. Thus, it is possible to provide a proposal for executing the data processing for another attribute item as the object instead of transmitting the error notification. Because of this, user-friendly notification can be transmitted.

The decryption request unit 224 transmits the processing request of the decryption processing to the data providing server 100 for requesting the data providing server 100 to decrypt the execution result of the data processing executed by the execution unit 223. At this time, the decryption request unit 224 can transmit the processing request of the decryption processing based on the number of the records included in the execution result. For example, when the number of the records extracted by the condition described in the SQL statement as the processing request is "1," the result (statistic value) of the statistical processing is coincide with the extracted attribute value of the record. Thus, raw data is disclosed. Accordingly, the administrator of the management server 200 and the data providing server 100 can preliminarily specify the decryption request unit 224 not to transmit the processing request of the decryption processing when the number of the extracted records is "1" as the decryption condition. It is also possible not to transmit the processing request of the decryption processing even when the number of the extracted record is not "1" according to the content of the statistical processing. Note that the decryption request unit 224 can transmit the processing request of the decryption processing based on the conditions of the record such as the record index, the attribute of the attribute item (column), the keyword and the user attribute instead of the above described number of records. For example, the condition of performing the processing request of the decryption processing can be specified so that only specific users can be decrypted for particular data (specifically, the record No. 101-200 can be decrypted only by the user A) or the data including specific keyword cannot be decrypted (specifically, the decryption is prohibited when the keyword "Tokyo" is included in the address column).

The decryption request unit 224 requests the data providing server 100 from which the sensitive data including the attribute item for the object of the data processing is provided to decrypt the execution result by the decryption key managed by the data providing server 100. Namely, about the attribute value of the attribute item for the object of the data processing, the execution result calculated for the statistical processing in the encrypted state is encrypted by the encryption key managed by the data providing server 100 which provides the sensitive data including the corresponding attribute item. Accordingly, the decryption processing should be executed by the data providing server 100 managing the decryption key corresponding to the encryption key. Then, the decryption request unit 224 refers to the configuration file 211, acquires the information of the data providing server 100 providing the attribute item for the object of the data processing, and transmits the processing request of the decryption processing to the data providing server 100.

It is also possible that the decryption request unit 224 inquires the data providing server 100 providing the sensitive data including the attribute item for the object of the data processing whether or not the execution result can be decrypted and requests the decryption of the execution result by the decryption key managed by the data providing server 100 in accordance with the permission response to the inquiry. For example, the data providing server 100 judges whether or not the predetermined decryption condition is satisfied or a responsible person and the like of the organization possessing the sensitive data judges whether or not the execution result can be decrypted. Thus, when the permission response of the decryption is received, the decryption request unit 224 transmits the execution result to request the decryption processing. Consequently, the original decryption conditions (e.g., presence/absence of the authority of performing the processing request) can be specified at the side of the data providing server 100. Note that the decryption request unit 224 can transmit the processing request so that the decryption processing is executed based on the configuration file 211 and the inquiry about the decryption of the execution result.

In addition, the decryption request unit 224 acquires the execution result decrypted by the data providing server 100 via the communication unit 201, and provides the acquired execution result to the terminal device 400 from which the processing request of the data processing is transmitted. Note that the terminal device 400 from which the processing request of the data processing is transmitted can preliminarily transmit the public key for encrypting the decrypted execution result to the management server 200 at the same time when transmitting the processing request of the data processing. In this case, the decryption request unit 224 transmits the public key of the terminal device 400 together with the processing request of the decryption processing to the data providing server 100. The data providing server 100 encrypts the decrypted execution result using the received public key, and transmits the encrypted data to the management server 200. The terminal device 400 receives the execution result encrypted by the public key of the terminal device 400 from the management server 200 and decrypts the execution result using the secret key of the terminal device 400. Thus, the terminal device 400 can acquire the execution result. Consequently, the data processing can be performed without disclosing the execution result to the management server 200.

It is possible that the decryption request unit 224 requests the data providing server 100 providing the sensitive data including the attribute item for the object of the data processing to decrypt the execution result by the encryption key managed by the data providing server 100 and provide the decrypted execution result to the terminal device 400 from which the processing request of the data processing is transmitted. Since the execution result is directly transmitted to the terminal device from which the processing request of the data processing is transmitted without passing through the management server 200, the number of communication processes can be reduced. Also in this case, same as the above described case, the public key of the terminal device 400 for encrypting the decrypted execution result can be preliminarily transmitted to the management server 200 at the same time when transmitting the processing request of the data processing. Although the example of encrypting the execution result by the public key of the terminal device 400 is described above, the execution result can be encrypted by the common key preliminarily shared in the data sharing system 1, for example.

### (Functional configuration of terminal device 400)

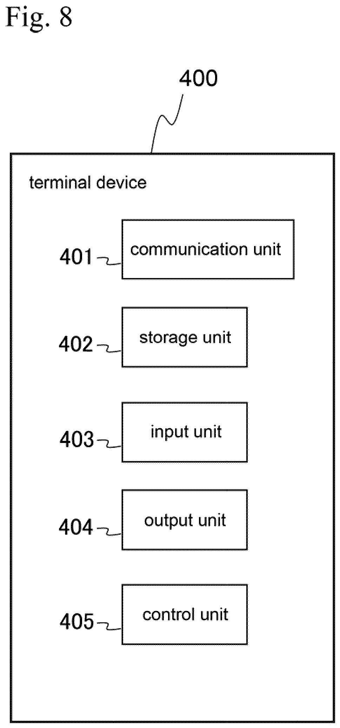

Fig. 8 is a functional block diagram showing an example of the functional configuration of the terminal device 400. With reference to Fig. 8, an example of the functional configuration of the terminal device 400 will be explained.

The terminal device 400 includes a communication unit 401, a storage unit 402, an input unit 403, an output unit 404 and a control unit 405. As described above, the terminal device 400 can be an information processing device operated by users belonging to the organization joined in a platform (data sharing system 1), for example.

The communication unit 401 has the similar function as the communication unit 101 of the data providing server 100. The communication unit 401 includes a communication interface circuit so that the terminal device 400 establishes the communication with the servers and the devices via the network NW according to a predetermined communication protocol. The communication unit 401 transmits the received data to the control unit 405 and transmits the data received from the control unit 405 to the other servers and the devices via the network NW.

The storage unit 402 is a memory device having the similar function as the storage unit 103 of the data providing server 100. The storage unit 402 stores computer programs, database, tables and the like used for various processing of the terminal device 400. The computer programs can be installed in the storage unit 402 from a portable computer-readable recording medium using a conventionally known setup program, for example. In addition, the storage unit 402 can store the encryption key (public key) for encrypting the execution result of the data processing in the terminal device 400 and the decryption key (secret key) for decrypting the execution result encrypted by the encryption key.

The input unit 403 is an interface for receiving a user input of the terminal device 400. The input unit 403 can be a keyboard, a touch panel and a microphone for detecting a sound input, for example. However, the input unit 403 is not limited to the above described examples. The user inputs the processing request of the data processing through the input unit 403. The processing request is written in SQL, for example.

The output unit 404 is an interface for outputting the information and notifying the user. The output unit 404 can be a display and a speaker for outputting sound, for example. However, the output unit 404 is not limited to the above described examples. The output unit 404 provides the execution result of the data processing to the user by displaying it on the display, for example.

The control unit 405 is a processor such as a CPU (Control Processing Unit) operated based on programs preliminarily stored in the storage unit 402 to control the functions of the terminal device 400. The control unit 405 transmits the processing request of the data processing inputted through the input unit 403 to the management server 200 via the communication unit 401. At this time, the control unit 405 can transmit the processing request together with the public key stored in the storage unit 402 to the management server 200. In addition, the control unit 405 acquires the execution result of the data processing via the communication unit 401. When the execution result of the data processing is encrypted by the public key of the terminal device 400, the execution result is obtained by decrypting it by the secret key which is paired with the public key. Note that the execution result can be encrypted by the common key for secure communication preliminarily or arbitrarily constructed in the data sharing system 1.

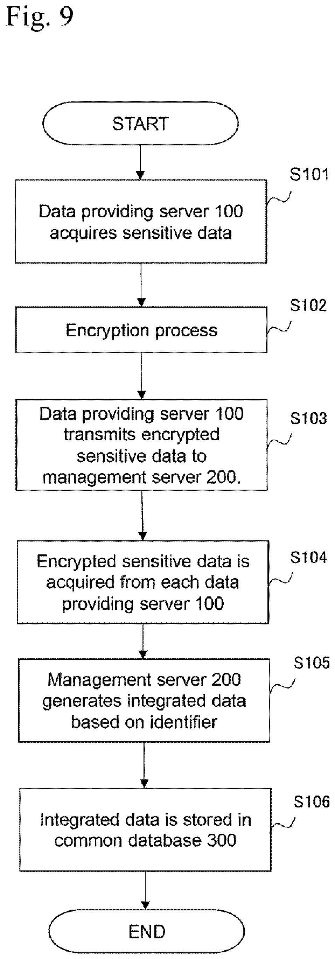

Fig. 9 is a flow chart showing an example of the process of storing the integrated data in the common database. With reference to Fig. 9, the flow of the processes of integrating the sensitive data provided by the organization joined in the platform (data sharing system 1) and storing the integrated data in the common database 300 will be explained. Note that the flow of the processes shown in Fig. 9 is merely an example. The flow is not limited to the orders shown in Fig. 9. In addition, it goes without saying that the process of integrating a plurality of tables into one table shown in Fig. 9 is merely an example.

In the step S101, the communication unit 101 of the data providing server 100 acquires the sensitive data from the organization and the like joined in the platform. The communication unit 101 transmits the acquired sensitive data to the control unit 102. The control unit 102 stores the sensitive data in the storage unit 103.

In the step S102, the control unit 102 of the data providing server 100 controls the encryption unit 105 to execute an encryption process with respect to the sensitive data acquired in the step S101.

According to the control of the control unit 102, the encryption unit 105 reads the sensitive data from the storage unit 103 and checks the data format and the like of the attribute item (column), for example. Then, the encryption unit 105 executes the encryption process corresponding to the data format of the attribute item and the content of the attribute item. For example, when the data format of the attribute value of the attribute item is the numerical value, the encryption process is performed using the homomorphic encryption scheme and/or the order-preserving encryption scheme. When the data format is the string, the encryption process is performed using the retrievable encryption scheme. Note that the encryption unit 105 can encrypt the attribute values of the identifier (common ID) (i.e., attribute item) although the encryption can be omitted for them. This is because the identifier can be used as the integrated key for the process of integrating the data even if it is encrypted. In addition, for the encryption process, the encryption unit 105 requests the encryption key to the key management unit 104 to acquire the key corresponding to the encryption scheme used for the encryption. The encryption unit 105 stores the encrypted sensitive data in the storage unit 103.

In the step S103, according to the control of the control unit 102, the communication unit 101 of the data providing server 100 transmits the encrypted sensitive data stored in the storage unit 103 to the management server 200. Note that the processes of the steps S101 to S 103 can be performed in parallel in the data providing server 100 which is associated with each organization joined in the platform (data sharing system 1).

In the step S104, the communication unit 201 of the management server 200 acquires the encrypted sensitive data from each data providing server 100. The communication unit 201 transmits the encrypted sensitive data to the integral control unit 221. The integral control unit 221 stores the encrypted sensitive data in the storage unit 210.

In the step S105, according to the control of the integral control unit 221, the integrated data generation unit 222 of the management server 200 reads the encrypted sensitive data stored in the storage unit 210, and integrates the sensitive data to generate the integrated data based on the identifier (common ID) included as one of the attribute items of the sensitive data. The integrated data generation unit 222 stores the generated integrated data in the storage unit 210.

In the step S106, according to the control of the integral control unit 221, a communication unit 210 of the management server 200 transmits the integrated data stored in the storage unit 210 to the common database 300. The common database 300 stores the received integrated data.

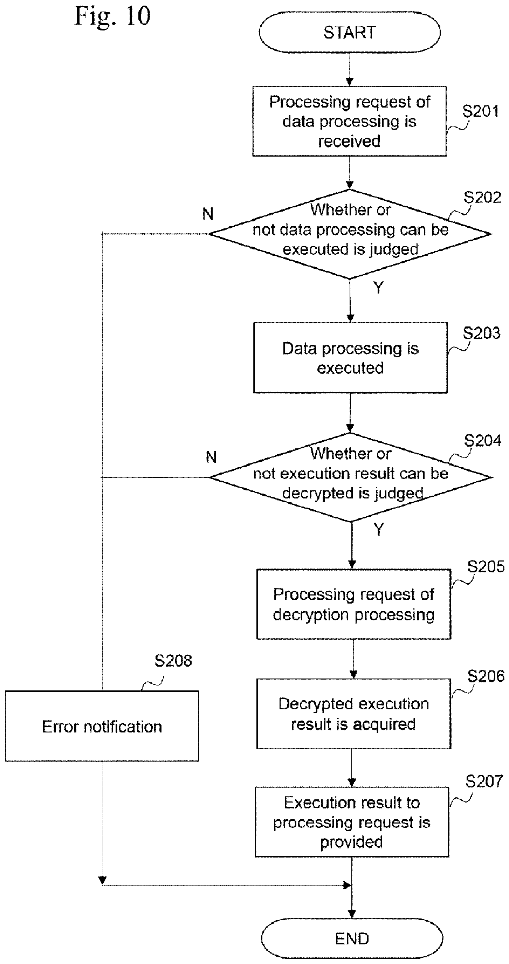

Fig. 10 is a flow chart showing an example of the data processing. With reference to Fig. 10, an example of the flow of the data processing in the management server 200 will be explained. Note that the flow of the data processing shown in Fig. 10 is merely an example. The flow is not limited to the orders shown in Fig. 10.

In the step S201, the communication unit 201 receives the processing request of the data processing from the terminal device 400. Note that the processing request of the data processing can be written in SQL, for example. In addition, the processing request can include the encryption key managed by the terminal device 400 for encrypting the decrypted execution result. In addition, the processing request can include the information for identifying the terminal device from which the processing request is transmitted (e.g., the user information of the terminal device 400 transmitting the processing request). The communication unit 201 transmits the received processing request of the data processing to the integral control unit 221.

In the step S202, according to the control of the integral control unit 221, the execution unit 223 judges whether or not the data processing can be executed based on the configuration file 211. For example, the execution unit 223 refers to the configuration file 211 shown in Fig. 7 to judge whether or not the user transmitting the processing request of the data processing has the execution authority or judge whether or not the attribute item of the object of the data processing included in the processing request is included in the integrated data. When the execution unit 223 judges based on the configuration file 211 that the data processing can be executed (Y in the step S202), the process is advanced to the step S203. When the execution unit 223 judges that the data processing cannot be executed (N in the step S202), the process is advanced to the step S208.

In the step S203, the execution unit 203 acquires the integrated data from the common database 300 to execute the data processing. The detailed explanation of the data processing is omitted since it has already been described. Since the sensitive data is encrypted by the encryption scheme that is capable of performing the calculation in the encrypted state, the execution unit 203 can calculate the sensitive data in the encrypted state in accordance with the processing request of the data processing and the execution result is also in the encrypted state. The execution unit 203 transmits the execution result to the decryption request unit 224.

In the step S204, the decryption request unit 224 judges whether or not the execution result can be decrypted. More specifically, the decryption request unit 224 judges whether or not the decryption can be executed based on the number of the records included in the execution result (e.g., the number of the records extracted for the statistical processing as the processing request of the data processing). When the decryption request unit 224 judges that the number of the records included in the execution result is "1" (N in the step S204), the process is advanced to the step S208. Otherwise (Y in the step S204), the process is advanced to the step S 205. Instead of judging whether or not the decryption processing can be executed based on the number of the records, the decryption request unit 224 can inquire the data providing server 100 providing the sensitive data including the attribute item for the object of the data processing whether or not to allow the decryption processing. It is possible to advance the process to the step S208 when the response is not received in a predetermined period after the inquiry.

In the step S205, the decryption request unit 224 transmits the processing request of the decryption processing of the execution result. For example, the decryption request unit 224 refers to the configuration file 211, and transmits the processing request of the decryption processing to the data providing server 100 providing the attribute item specified as the object of the statistical processing via the communication unit 201. In accordance with the processing request of the decryption processing, the data providing server 100 executes the decryption processing of the execution result based on the decryption key. Note that the processing request of the decryption processing can include the encryption key of the terminal device 400 which transmits the processing request of the data processing so that the data providing server 100 can encrypt the decrypted execution result by the encryption key. Because of this, the execution result is not disclosed to other than the data providing server 100 providing the data and the terminal device 400 transmitting the processing request of the data processing. Thus, the information leakage can be prevented.

In the step S206, the decryption request unit 224 acquires the decrypted execution result via the communication unit 201.

In the step S207, the decryption request unit 224 provides the acquired execution result to the terminal device 400 transmitting the processing request of the data. When the acquired execution result is encrypted by the public key of the terminal device 400, the terminal device 400 decrypts the execution result using the secret key.

Furthermore, in the step S208, according to the judgement of not allowing the execution by the execution unit 223 in the step S202 and the judgement of not allowing the decryption by the decryption request unit 224 in the step S204, the integral control unit 221 notifies the error notifying via the communication unit 201 that the execution result of the data processing cannot be provided. At this time, the reason such as the absence of the execution authority can be notified. As described above, the data processing is executed in the data sharing system 1.

### (Hardware configuration diagram)

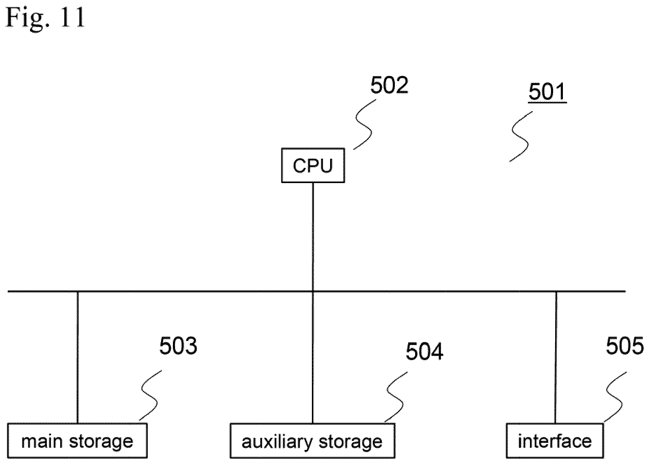

Fig. 11 is a block diagram showing a hardware configuration of the management server 200. The management server 200 is implemented in a computer 501. The computer 501 includes a CPU 502, a main storage 503, an auxiliary storage 504 and an interface 505.

The operations of each configuration of the management server 200 are stored in the auxiliary storage 504 in the form of programs. The CPU 502 reads the programs from the auxiliary storage 504, expands the programs in the main storage 503, and executes the above described processes according to the programs. In addition, the CPU 502 secures a storage area in the main storage 503 according to the programs. Specifically, the programs make the computer 501 execute the data processing.

Note that the auxiliary storage 504 is an example of a non-transitory tangible medium. A magnetic disk, a magneto-optical disk, a CD-ROM, a DVD-ROM, a semiconductor memory and the like connected via the interface 505 can be listed as the other examples of the non-transitory tangible medium. Furthermore, when the programs are distributed to the computer 501 via the network, the computer 501 receiving the delivery can expand the programs in the main storage 503 to execute the processes.

In addition, the programs can be prepared for achieving only a part of the above described functions. Furthermore, the programs can be a so-called difference file (difference program) for achieving the above described functions while combined with the other programs already stored in the auxiliary storage 504. Note that the hardware configuration shown in Fig. 11 can be used also for the data providing server 100 and the terminal device 400. Same as the above described management server 200, the operations of components of the data providing server 100 and the terminal device 400 are also achieved by the CPU which is operated in accordance with the programs stored in the auxiliary storage.

### (Explanation of effect)

As described above, the data sharing system of the present embodiment includes a plurality of data providing servers, a common database and a management server, wherein the management server receives the processing request of the data processing with respect to the integrated data obtained by integrating the sensitive data provided from each of the data providing servers and encrypted by the predetermined encryption scheme. Then, the management server executes the data processing in the encrypted state, and requests the data providing server providing the sensitive data including the attribute item of the object of the data processing to decrypt the execution result of the data processing based on the decryption key managed by the data providing server. The integrated data formed by integrating the sensitive data is stored in the common database in the encrypted state and the data processing is executed in the management server. As described above, the management server does not acquire the decryption key of the sensitive data and cannot decrypt the encrypted sensitive data and decrypt the execution result. Thus, the sensitive data and the execution result of the data processing (e.g., statistical processing) using the sensitive data can be prevented from leaking.

Furthermore, in the present embodiment, the common database is the relational database having a table for storing the attribute items as columns. Since the data processing is the retrieval processing and/or the statistical processing targeting at least a part of the attribute items of the integrated data, the organization joined in the data sharing system can perform the retrieval processing and the statistical processing using the attribute values of the attribute items possessed by the other organizations. Consequently, even when the organization only has sparse data, the organization can utilize the data of the other organizations joined in the data sharing system.

Furthermore, in the present embodiment, the processing request of the decryption processing of the execution result is performed based on the number of the records included in the execution result. Consequently, when the number of the records is 1, the execution result is prevented from being decrypted. Thus, the raw data can be prevented from being disclosed.

Furthermore, in the present embodiment, the management server requests the data providing servers providing the sensitive data including the attribute item of the object of the data processing to decrypt the execution result by the decryption key managed by each of the data providing servers. The execution result can be decrypted only by the data providing server providing and encrypting the sensitive data. Thus, the organization possessing the sensitive data can manage the sensitive data safely in terms of security.

Furthermore, in the present embodiment, the management server inquires the data providing server providing the sensitive data including the attribute item of the object of the data processing whether or not the execution result can be decrypted. According to the permission response of the inquiry, the management server requests the data providing server to decrypt the execution result by the decryption key managed by the data providing servers. Consequently, whether or not to decrypt the execution result can be managed also at the side of the data providing server. Thus, the information leakage can be prevented.

Furthermore, in the present embodiment, the management server or the data providing server provides the execution result decrypted by the data providing server to the terminal device from which the processing request of the data processing is transmitted. Consequently, the terminal device from which the processing request of the data processing is transmitted can acquire the execution result.

Furthermore, in the present embodiment, the data processing is executed based on the configuration file which defines a criteria for determining whether or not the data processing can be executed. Consequently, whether or not to execute the data processing can be judged before executing the data processing. Thus, the execution of the data processing requested by the user without having the execution authority of the data processing can be avoided, for example. Therefore, the amount of the data processing can be reduced.

Furthermore, in the present embodiment, the sensitive data is encrypted by at least one of the homomorphic encryption scheme, the order-preserving encryption scheme, the AES, the DES, the retrievable encryption, the SHA and the MD5. Consequently, the data processing can be executed in the encrypted state. Thus, the sensitive data can be utilized while preventing the information leakage.

Furthermore, in the present embodiment, the management server integrates the sensitive data to generate the integrated data and stores the integrated data in the common database. Consequently, the organization joined in the data sharing system can easily utilize the sensitive data possessed by the organization as the integrated data without disclosing the sensitive data to the other organizations.

### < Variation example 1 of embodiment 1>

The terminal device 400 is an information processing device used by employees of the organization such as the company A in association with the data providing server 100-1 which joins in the platform and provides the sensitive data. In this case, the terminal device 400 can preliminarily acquire the encryption key managed by the data providing server 100-1.

When the conditional statement of the SQL statement transmitted as the processing request of the data processing is the match judgement of the condition including the attribute item provided by the data providing server 100-1, the terminal device 400 encrypts the conditional statement by the retrievable encryption scheme based on the encryption key acquired from the data providing server 100-1 and transmits the encrypted conditional statement to the management server 200. Consequently, when the data processing is executed in the management server 200, the process of requesting the data providing server 100-1 to encrypt the conditional statement of the SQL statement can be omitted. Thus, the effect of increasing the processing efficiency can be obtained.

The above described embodiments can be carried out in other various forms. Various omission, replacement and change can be applied within the range not deviating from the summary of the present invention. The embodiments and the variation of them are included in the range and summary of the present invention and also included in the invention described in the claims and the range equivalent to them.

### [Description of the Reference Numerals]

1: data sharing system; 100: data providing server; 200: management server; 300: common database; 400: terminal device; 101, 201, 401: communication unit; 102, 220, 405: control unit; 103, 210, 402: storage unit; 104: key management unit; 105: encryption unit; 106: decryption unit; 211: configuration file; 221: integral control unit; 222: integrated data generation unit; 223: execution unit; 224: the decryption request unit; 403: input unit; 404: output unit

## Claims

1. A data sharing system (1) comprising:
a plurality of data providing servers (100);
a common database (300); and
a management server (200), wherein
each of the plurality of data providing servers includes:
a sensitive data acquisition unit (101) configured to acquire sensitive data including attribute values of each of attribute items;
a key management unit (104) configured to manage an encryption key and a decryption key; and
an encryption unit (105) configured to encrypt at least a part of the attribute values of the sensitive data by a predetermined encryption scheme based on the encryption key,
the common database is configured to store an integrated data obtained by integrating the sensitive data encrypted in the plurality of data providing servers based on an identifier which is included in the sensitive data as one of the attribute items,
the management server includes:
a reception unit (201) configured to receive a first processing request of a data processing processed to the integrated data stored in the common database;
an execution unit (223) configured to execute the data processing; and
a decryption request unit (224) configured to transmit a second processing request of a decryption processing to the plurality of data providing servers for requesting the plurality of data providing servers to decrypt an execution result of the data processing,
each of the plurality of data providing servers further includes a decryption unit configured to decrypt the execution result based on the decryption key in accordance with the second processing request of the decryption processing transmitted from the decryption request unit of the management server, wherein
the common database stores a table including the attribute items as columns,
the data processing includes a retrieval processing and/or a statistical processing targeted at least a part of the attribute items of the integrated data, and
the decryption request unit (224) requests one of the plurality of data providing servers to decrypt the execution result by a decryption key managed by the one of the plurality of data providing servers, the one of the plurality of data providing servers providing the sensitive data including the attribute items to which the data processing is executed.

2. The data sharing system (1) according to claim 1, wherein
the decryption request unit (224) transmits the second processing request of the decryption processing based on the number of records included in the execution result.

3. The data sharing system (1) according to claim 1 or claim 2, wherein
the decryption request unit (224) transmits an inquiry to one of the plurality of data providing servers (100) whether or not the one of the plurality of data providing servers can decrypt the execution result, the one of the plurality of data providing servers providing the sensitive data including the attribute items to which the data processing is executed, and
the decryption request unit requests one of the plurality of data providing servers to decrypt the execution result by a decryption key managed by the one of the plurality of data providing servers according to a permission response of the inquiry.

4. The data sharing system (1) according to any one of claims 1 to 3, wherein
the decryption request unit (224) acquires the execution result decrypted by the one of the plurality of the data providing servers, and
the decryption request unit provides the acquired execution result to a terminal device from which the first processing request of the data processing is transmitted.

5. The data sharing system (1) according to claim 1 or claim 2, wherein
the decryption request unit (224) provides the decrypted execution result to a terminal device (400) from which the first processing request of the data processing is transmitted.

6. The data sharing system (1) according to any one of claims 1 to 5, wherein
the execution unit (223) executes the data processing based on a configuration file which defines a criteria for determining whether or not the data processing can be executed.

7. The data sharing system (1) according to any one of claims 1 to 6, wherein
the predetermined encryption scheme includes at least one of a homomorphic encryption scheme, an order-preserving encryption scheme, AES, DES, a retrievable encryption, SHA and MD5.

8. The data sharing system (1) according to any one of claims 1 to 7, wherein
the data processing includes a processing of integrating the sensitive data, and
the execution unit (223) generates the integrated data and stores the generated integrated data in the common database.

9. A data sharing method in a system, the system (1) comprising:
a plurality of data providing servers (100);
a common database (300); and
a management server (200), wherein
each of the plurality of data providing servers executes:
a step of acquiring sensitive data including attribute values of each of attribute items;
a step of managing an encryption key and a decryption key; and
a step of encrypting at least a part of the attribute values of the sensitive data by a predetermined encryption scheme based on the encryption key,
the common database executes a step of storing an integrated data obtained by integrating the sensitive data encrypted in the plurality of data providing servers based on an identifier which is included in the sensitive data as one of the attribute items,
the management server executes:
a step of receiving a first processing request of a data processing processed to the integrated data stored in the common database;
a step of executing the data processing; and
a step of transmitting a second processing request of a decryption processing to the plurality of data providing servers for requesting the plurality of data providing servers to decrypt an execution result of the data processing, and
each of the plurality of data providing servers further executes a step of decrypting the execution result based on the decryption key in accordance with the second processing request of the decryption processing transmitted from the management server, wherein
the common database stores a table including the attribute items as columns,
the data processing includes a retrieval processing and/or a statistical processing targeted at least a part of the attribute items of the integrated data, and
the management server further executes a step of requesting one of the plurality of data providing servers to decrypt the execution result by a decryption key managed by the one of the plurality of data providing servers, the one of the plurality of data providing servers providing the sensitive data including the attribute items to which the data processing is executed.

10. A data sharing program executed by a system (1), the system comprising:
a plurality of data providing servers (100);
a common database (300); and
a management server (200), wherein
each of the plurality of data providing servers executes:
a step of acquiring sensitive data including attribute values of each of attribute items;
a step of managing an encryption key and a decryption key; and
a step of encrypting at least a part of the attribute values of the sensitive data by a predetermined encryption scheme based on the encryption key,
the common database executes a step of storing an integrated data obtained by integrating the sensitive data encrypted in the plurality of data providing servers based on an identifier which is included in the sensitive data as one of the attribute items,
the management server executes:
a step of receiving a first processing request of a data processing processed to the integrated data stored in the common database;
a step of executing the data processing; and
a step of transmitting a second processing request of a decryption processing to the plurality of data providing servers for requesting the plurality of data providing servers to decrypt an execution result of the data processing, and
each of the plurality of data providing servers further executes a step of decrypting the execution result based on the decryption key in accordance with the second processing request of the decryption processing transmitted from the management server, wherein
the common database stores a table including the attribute items as columns,
the data processing includes a retrieval processing and/or a statistical processing targeted at least a part of the attribute items of the integrated data, and
the management server further executes a step of requesting one of the plurality of data providing servers to decrypt the execution result by a decryption key managed by the one of the plurality of data providing servers, the one of the plurality of data providing servers providing the sensitive data including the attribute items to which the data processing is executed.

## Patentansprüche

1. System zur gemeinsamen Nutzung von Daten (1), welches Folgendes umfasst:
mehrere Datenbereitstellungsserver (100);
eine gemeinsame Datenbank (300); und
einen Verwaltungsserver (200),
wobei jeder der mehreren Datenbereitstellungsserver Folgendes beinhaltet:
eine Erfassungseinheit für sensible Daten (101), die zum Erfassen sensibler Daten, die Attributwerte von jedem von Attributelementen beinhalten, konfiguriert ist;
eine Schlüsselverwaltungseinheit (104), die zum Verwalten eines Verschlüsselungsschlüssels und eines Entschlüsselungsschlüssels konfiguriert ist; und
eine Verschlüsselungseinheit (105), die zum Verschlüsseln mindestens eines Teils der Attributwerte der sensiblen Daten durch ein vorbestimmtes Verschlüsselungsschema basierend auf dem Verschlüsselungsschlüssel konfiguriert ist,
wobei die gemeinsame Datenbank zum Speichern integrierter Daten konfiguriert ist, die durch das Integrieren der sensiblen Daten, die in den mehreren Datenbereitstellungsservern verschlüsselt werden, basierend auf einem Identifikator erhalten werden, welcher als eines der Attributelemente in den sensiblen Daten enthalten ist, wobei der Verwaltungsserver Folgendes beinhaltet:
eine Empfangseinheit (201), die zum Empfangen einer ersten Verarbeitungsanfrage einer Datenverarbeitung konfiguriert ist, die an den integrierten Daten, die in der gemeinsamen Datenbank gespeichert sind, durchgeführt wird;
eine Ausführungseinheit (223), die zum Ausführen der Datenverarbeitung konfiguriert ist; und
eine Entschlüsselungsanforderungseinheit (224), die zum Senden einer zweiten Verarbeitungsanfrage einer Entschlüsselungsverarbeitung an die mehreren Datenbereitstellungsserver konfiguriert ist, um die mehreren Datenbereitstellungsserver zum Entschlüsseln eines Ausführungsergebnisses der Datenverarbeitung aufzufordern,
wobei jeder der mehreren Datenbereitstellungsserver ferner eine Entschlüsselungseinheit beinhaltet, die zum Entschlüsseln des Ausführungsergebnisses basierend auf dem Entschlüsselungsschlüssel in Übereinstimmung mit der zweiten Verarbeitungsanfrage der Entschlüsselungsverarbeitung, die von der Entschlüsselungsanforderungseinheit des Verwaltungsservers gesendet wird, konfiguriert ist, wobei
die gemeinsame Datenbank eine Tabelle speichert, welche die Attributelemente als Spalten beinhaltet,
die Datenverarbeitung eine Abrufverarbeitung und/oder eine statistische Verarbeitung beinhaltet, die auf mindestens einen Teil der Attributelemente der integrierten Daten gerichtet ist, und
die Entschlüsselungsanforderungseinheit (224) einen der mehreren Datenbereitstellungsserver auffordert, das Ausführungsergebnis durch einen Entschlüsselungsschlüssel zu entschlüsseln, der durch den einen der mehreren Datenbereitstellungsserver verwaltet wird, wobei der eine der mehreren Datenbereitstellungsserver die sensiblen Daten bereitstellt, welche die Attributelemente enthalten, an welchen die Datenverarbeitung ausgeführt wird.

2. System zur gemeinsamen Nutzung von Daten (1) nach Anspruch 1, wobei
die Entschlüsselungsanforderungseinheit (224) die zweite Verarbeitungsanfrage der Entschlüsselungsverarbeitung basierend auf der Anzahl der Datensätze, die in dem Ausführungsergebnis enthalten sind, sendet.

3. System zur gemeinsamen Nutzung von Daten (1) nach Anspruch 1 oder Anspruch 2, wobei
die Entschlüsselungsanforderungseinheit (224) eine Anfrage an einen der mehreren Datenbereitstellungsserver (100) sendet, ob der eine der mehreren Datenbereitstellungsserver das Ausführungsergebnis entschlüsseln kann oder nicht, wobei der eine der mehreren Datenbereitstellungsserver die sensiblen Daten bereitstellt, welche die Attributelemente beinhalten, an welchen die Datenverarbeitung ausgeführt wird, und
die Entschlüsselungsanforderungseinheit einen der mehreren Datenbereitstellungsserver auffordert, das Ausführungsergebnis durch einen Entschlüsselungsschlüssel, der durch den einen der mehreren Datenbereitstellungsserver verwaltet wird, gemäß einer Genehmigungsantwort auf die Anfrage zu entschlüsseln.

4. System zur gemeinsamen Nutzung von Daten (1) nach einem der Ansprüche 1 bis 3, wobei
die Entschlüsselungsanforderungseinheit (224) das Ausführungsergebnis erfasst, das durch den einen der mehreren der Datenbereitstellungsserver entschlüsselt wird, und
die Entschlüsselungsanforderungseinheit das erfasste Ausführungsergebnis an ein Endgerät bereitstellt, von welchem die erste Verarbeitungsanfrage der Datenverarbeitung gesendet wird.

5. System zur gemeinsamen Nutzung von Daten (1) nach Anspruch 1 oder Anspruch 2, wobei
die Entschlüsselungsanforderungseinheit (224) das entschlüsselte Ausführungsergebnis an ein Endgerät (400) bereitstellt, von welchem die erste Verarbeitungsanfrage der Datenverarbeitung gesendet wird.

6. System zur gemeinsamen Nutzung von Daten (1) nach einem der Ansprüche 1 bis 5, wobei
die Ausführungseinheit (223) die Datenverarbeitung basierend auf einer Konfigurationsdatei ausführt, welche ein Kriterium zum Bestimmen dessen definiert, ob die Datenverarbeitung ausgeführt werden kann oder nicht.

7. System zur gemeinsamen Nutzung von Daten (1) nach einem der Ansprüche 1 bis 6, wobei
das vorbestimmte Verschlüsselungsschema mindestens eines aus einem homomorphen Verschlüsselungsschema, einem ordnungserhaltenden Verschlüsselungsschema, AES, DES, einer abrufbaren Verschlüsselung, SHA und MD5 beinhaltet.

8. System zur gemeinsamen Nutzung von Daten (1) nach einem der Ansprüche 1 bis 7, wobei
die Datenverarbeitung eine Verarbeitung des Integrierens der sensiblen Daten beinhaltet, und
die Ausführungseinheit (223) die integrierten Daten erzeugt und die erzeugten integrierten Daten in der gemeinsamen Datenbank speichert.

9. Verfahren zur gemeinsamen Nutzung von Daten in einem System, wobei das System (1) Folgendes umfasst:
mehrere Datenbereitstellungsserver (100);
eine gemeinsame Datenbank (300); und
einen Verwaltungsserver (200),
wobei jeder der mehreren Datenbereitstellungsserver Folgendes ausführt:
einen Schritt des Erfassens sensibler Daten, die Attributwerte von jedem von Attributelementen beinhalten;
einen Schritt des Verwaltens eines Verschlüsselungsschlüssels und eines Entschlüsselungsschlüssels; und
einen Schritt des Verschlüsselns mindestens eines Teils der Attributwerte der sensiblen Daten durch ein vorbestimmtes Verschlüsselungsschema basierend auf dem Verschlüsselungsschlüssel,
wobei die gemeinsame Datenbank einen Schritt des Speicherns integrierter Daten ausführt, die durch das Integrieren der sensiblen Daten, die in den mehreren Datenbereitstellungsservern verschlüsselt werden, basierend auf einem Identifikator erhalten werden, welcher als eines der Attributelemente in den sensiblen Daten enthalten ist, wobei der Verwaltungsserver Folgendes ausführt:
einen Schritt des Empfangens einer ersten Verarbeitungsanfrage einer Datenverarbeitung, die an den integrierten Daten, die in der gemeinsamen Datenbank gespeichert sind, durchgeführt wird;
einen Schritt des Ausführens der Datenverarbeitung; und
einen Schritt des Sendens einer zweiten Verarbeitungsanfrage einer Entschlüsselungsverarbeitung an die mehreren Datenbereitstellungsserver, um die mehreren Datenbereitstellungsserver zum Entschlüsseln eines Ausführungsergebnisses der Datenverarbeitung aufzufordern, und
wobei jeder der mehreren Datenbereitstellungsserver ferner einen Schritt des Entschlüsselns des Ausführungsergebnisses basierend auf dem Entschlüsselungsschlüssel in Übereinstimmung mit der zweiten Verarbeitungsanfrage der Entschlüsselungsverarbeitung, die vom Verwaltungsserver gesendet wird, ausführt, wobei
die gemeinsame Datenbank eine Tabelle speichert, welche die Attributelemente als Spalten beinhaltet,
die Datenverarbeitung eine Abrufverarbeitung und/oder eine statistische Verarbeitung beinhaltet, die auf mindestens einen Teil der Attributelemente der integrierten Daten gerichtet ist, und
der Verwaltungsserver ferner einen Schritt des Aufforderns eines der mehreren Datenbereitstellungsserver, das Ausführungsergebnis durch einen Entschlüsselungsschlüssel zu entschlüsseln, der durch den einen der mehreren Datenbereitstellungsserver verwaltet wird, ausführt, wobei der eine der mehreren Datenbereitstellungsserver die sensiblen Daten bereitstellt, welche die Attributelemente enthalten, an welchen die Datenverarbeitung ausgeführt wird.

10. Programm zur gemeinsamen Nutzung von Daten, das durch ein System (1) ausgeführt wird, wobei das System Folgendes umfasst:
mehrere Datenbereitstellungsserver (100);
eine gemeinsame Datenbank (300); und
einen Verwaltungsserver (200),
wobei jeder der mehreren Datenbereitstellungsserver Folgendes ausführt:
einen Schritt des Erfassens sensibler Daten, die Attributwerte von jedem von Attributelementen beinhalten;
einen Schritt des Verwaltens eines Verschlüsselungsschlüssels und eines Entschlüsselungsschlüssels; und
einen Schritt des Verschlüsselns mindestens eines Teils der Attributwerte der sensiblen Daten durch ein vorbestimmtes Verschlüsselungsschema basierend auf dem Verschlüsselungsschlüssel,
wobei die gemeinsame Datenbank einen Schritt des Speicherns integrierter Daten ausführt, die durch das Integrieren der sensiblen Daten, die in den mehreren Datenbereitstellungsservern verschlüsselt werden, basierend auf einem Identifikator erhalten werden, welcher als eines der Attributelemente in den sensiblen Daten enthalten ist, wobei der Verwaltungsserver Folgendes ausführt:
einen Schritt des Empfangens einer ersten Verarbeitungsanfrage einer Datenverarbeitung, die an den integrierten Daten, die in der gemeinsamen Datenbank gespeichert sind, durchgeführt wird;
einen Schritt des Ausführens der Datenverarbeitung; und
einen Schritt des Sendens einer zweiten Verarbeitungsanfrage einer Entschlüsselungsverarbeitung an die mehreren Datenbereitstellungsserver, um die mehreren Datenbereitstellungsserver zum Entschlüsseln eines Ausführungsergebnisses der Datenverarbeitung aufzufordern, und
wobei jeder der mehreren Datenbereitstellungsserver ferner einen Schritt des Entschlüsselns des Ausführungsergebnisses basierend auf dem Entschlüsselungsschlüssel in Übereinstimmung mit der zweiten Verarbeitungsanfrage der Entschlüsselungsverarbeitung, die vom Verwaltungsserver gesendet wird, ausführt, wobei
die gemeinsame Datenbank eine Tabelle speichert, welche die Attributelemente als Spalten beinhaltet,
die Datenverarbeitung eine Abrufverarbeitung und/oder eine statistische Verarbeitung beinhaltet, die auf mindestens einen Teil der Attributelemente der integrierten Daten gerichtet ist, und
der Verwaltungsserver ferner einen Schritt des Aufforderns eines der mehreren Datenbereitstellungsserver, das Ausführungsergebnis durch einen Entschlüsselungsschlüssel zu entschlüsseln, der durch den einen der mehreren Datenbereitstellungsserver verwaltet wird, ausführt, wobei der eine der mehreren Datenbereitstellungsserver die sensiblen Daten bereitstellt, welche die Attributelemente enthalten, an welchen die Datenverarbeitung ausgeführt wird.

## Revendications

1. Système de partage de données (1) comprenant : une pluralité de serveurs de fourniture de données (100) ;
une base de données commune (300) ; et
un serveur de gestion (200), dans lequel
chacun de la pluralité de serveurs de fourniture de données comprend :
une unité d'acquisition de données sensibles (101) configurée pour acquérir des données sensibles comprenant des valeurs d'attribut de chacun des éléments d'attribut ;
une unité de gestion de clés (104) configurée pour gérer une clé de chiffrement et une clé de déchiffrement ; et
une unité de chiffrement (105) configurée pour chiffrer au moins une partie des valeurs d'attribut des données sensibles par un schéma de chiffrement prédéterminé basé sur la clé de chiffrement,
la base de données commune est configurée pour mémoriser des données intégrées obtenues en intégrant les données sensibles chiffrées dans la pluralité de serveurs de fourniture de données sur la base d'un identifiant qui est inclus dans les données sensibles en tant qu'un des éléments d'attribut, le serveur de gestion comprend :
une unité de réception (201) configurée pour recevoir une première demande de traitement d'un traitement de données traité sur les données intégrées mémorisées dans la base de données commune ;
une unité d'exécution (223) configurée pour exécuter le traitement de données ; et
une unité de demande de déchiffrement (224) configurée pour transmettre une deuxième demande de traitement d'un traitement de déchiffrement à la pluralité de serveurs de fourniture de données pour demander à la pluralité de serveurs de fourniture de données de déchiffrer un résultat d'exécution du traitement de données,
chacun de la pluralité de serveurs de fourniture de données comprend en outre une unité de déchiffrement configurée pour déchiffrer le résultat d'exécution sur la base de la clé de déchiffrement conformément à la deuxième demande de traitement du traitement de déchiffrement transmise à partir de l'unité de demande de déchiffrement du serveur de gestion, dans lequel
la base de données commune mémorise une table comprenant les éléments d'attribut sous forme de colonnes,
le traitement de données comprend un traitement de récupération et/ou un traitement statistique ciblant au moins une partie des éléments d'attribut des données intégrées, et
l'unité de demande de déchiffrement (224) demande à un de la pluralité de serveurs de fourniture de données de déchiffrer le résultat d'exécution par une clé de déchiffrement gérée par un de la pluralité de serveurs de fourniture de données, un de la pluralité de serveurs de fourniture de données fournissant les données sensibles comprenant les éléments d'attribut sur lesquels le traitement de données est exécuté.

2. Système de partage de données (1) selon la revendication 1, dans lequel
l'unité de demande de déchiffrement (224) transmet la deuxième demande de traitement du traitement de déchiffrement en fonction du nombre d'enregistrements inclus dans le résultat d'exécution.

3. Système de partage de données (1) selon la revendication 1 ou la revendication 2, dans lequel
l'unité de demande de déchiffrement (224) transmet une requête à un de la pluralité de serveurs de fourniture de données (100) pour savoir si un de la pluralité de serveurs de fourniture de données peut ou non déchiffrer le résultat d'exécution, un de la pluralité de serveurs de fourniture de données fournissant les données sensibles comprenant les éléments d'attribut sur lesquels le traitement de données est exécuté et
l'unité de demande de déchiffrement demande à un de la pluralité de serveurs de fourniture de données de déchiffrer le résultat d'exécution par une clé de déchiffrement gérée par un de la pluralité de serveurs de fourniture de données selon une réponse d'autorisation de la requête.

4. Système de partage de données (1) selon une quelconque des revendications 1 à 3, dans lequel
l'unité de demande de déchiffrement (224) acquiert le résultat d'exécution décrypté par un des serveurs de fourniture de données, et
l'unité de demande de déchiffrement fournit le résultat d'exécution acquis à un dispositif de terminal à partir duquel la première demande de traitement du traitement de données est transmise.

5. Système de partage de données (1) selon la revendication 1 ou la revendication 2, dans lequel
l'unité de demande de déchiffrement (224) fournit le résultat d'exécution décrypté à un dispositif de terminal (400) à partir duquel la première demande de traitement du traitement de données est transmise.

6. Système de partage de données (1) selon une quelconque des revendications 1 à 5, dans lequel
l'unité d'exécution (223) exécute le traitement de données sur la base d'un fichier de configuration qui définit un critère pour déterminer si le traitement de données peut être exécuté ou non.

7. Système de partage de données (l) selon une quelconque des revendications 1 à 6, dans lequel
le schéma de chiffrement prédéterminé comprend au moins un d'un schéma de chiffrement homomorphe, un schéma de chiffrement préservant l'ordre, AES, DES, un chiffrement récupérable, SHA et MD5.

8. Système de partage de données (l) selon une quelconque des revendications 1 à 7, dans lequel
le traitement de données comprend un traitement d'intégration des données sensibles, et
l'unité d'exécution (223) génère les données intégrées et mémorise les données intégrées générées dans la base de données commune.

9. Procédé de partage de données dans un système, le système (l) comprenant :
une pluralité de serveurs de fourniture de données (100) ;
une base de données commune (300) ; et
un serveur de gestion (200),
dans lequel chacun de la pluralité de serveurs de fourniture de données exécute :
une étape d'acquisition de données sensibles comprenant des valeurs d'attribut de chacun des éléments d'attribut ;
une étape de gestion d'une clé de chiffrement et d'une clé de déchiffrement ; et
une étape de chiffrement d'au moins une partie des valeurs d'attribut des données sensibles par un schéma de chiffrement prédéterminé basé sur la clé de chiffrement,
la base de données commune exécute une étape de mémorisation d'une donnée intégrée obtenue en intégrant les données sensibles chiffrées dans la pluralité de serveurs de fourniture de données sur la base d'un identifiant qui est inclus dans les données sensibles comme un des éléments d'attribut, le serveur de gestion exécute :
une étape de réception d'une première demande de traitement d'un traitement de données traité sur les données intégrées mémorisées dans la base de données commune ;
une étape d'exécution du traitement de données ; et
une étape de transmission d'une deuxième demande de traitement d'un traitement de déchiffrement à la pluralité de serveurs de fourniture de données pour demander à la pluralité de serveurs de fourniture de données de déchiffrer un résultat d'exécution du traitement de données, et
chacun de la pluralité de serveurs de fourniture de données exécute en outre une étape de déchiffrement du résultat d'exécution sur la base de la clé de déchiffrement conformément à la deuxième demande de traitement du traitement de déchiffrement transmise par le serveur de gestion, dans lequel
la base de données commune mémorise une table comprenant les éléments d'attribut sous forme de colonnes,
le traitement de données comprend un traitement de récupération et/ou un traitement statistique ciblant au moins une partie des éléments d'attribut des données intégrées, et
le serveur de gestion exécute en outre une étape de demande à un de la pluralité de serveurs de fourniture de données de déchiffrer le résultat d'exécution par une clé de déchiffrement gérée par un de la pluralité de serveurs de fourniture de données, un de la pluralité de serveurs de fourniture de données fournissant les données sensibles comprenant les éléments d'attribut sur lesquels le traitement de données est exécuté.

10. Programme de partage de données exécuté par un système (l), le système comprenant :
une pluralité de serveurs de fourniture de données (100) ;
une base de données commune (300) ; et
un serveur de gestion (200),
dans lequel chacun de la pluralité de serveurs de fourniture de données exécute :
une étape d'acquisition de données sensibles comprenant des valeurs d'attribut de chacun des éléments d'attribut ;
une étape de gestion d'une clé de chiffrement et d'une clé de déchiffrement ; et
une étape de chiffrement d'au moins une partie des valeurs d'attribut des données sensibles par un schéma de chiffrement prédéterminé basé sur la clé de chiffrement,
la base de données commune exécute une étape de mémorisation de données intégrées obtenues en intégrant les données sensibles chiffrées dans la pluralité de serveurs de fourniture de données sur la base d'un identifiant qui est inclus dans les données sensibles en tant qu'un des éléments d'attribut, le serveur de gestion exécute :
une étape de réception d'une première demande de traitement d'un traitement de données traité sur les données intégrées mémorisées dans la base de données commune ;
une étape d'exécution du traitement de données ; et
une étape de transmission d'une deuxième demande de traitement d'un traitement de déchiffrement à la pluralité de serveurs de fourniture de données pour demander à la pluralité de serveurs de fourniture de données de déchiffrer un résultat d'exécution du traitement de données, et
chacun de la pluralité de serveurs de fourniture de données exécute en outre une étape de déchiffrement du résultat d'exécution sur la base de la clé de déchiffrement conformément à la deuxième demande de traitement du traitement de déchiffrement transmise par le serveur de gestion, dans lequel
la base de données commune mémorise une table comprenant les éléments d'attribut sous forme de colonnes,
le traitement de données comprend un traitement de récupération et/ou un traitement statistique ciblant au moins une partie des éléments d'attribut des données intégrées, et
le serveur de gestion exécute en outre une étape de demande à un de la pluralité de serveurs de fourniture de données de déchiffrer le résultat d'exécution par une clé de déchiffrement gérée par un de la pluralité de serveurs de fourniture de données, un de la pluralité de serveurs de fourniture de données fournissant les données sensibles comprenant les éléments d'attribut sur lesquels le traitement de données est exécuté.
